Europäisches Patentamt

European Patent Office

Office européen des brevets

(11) Veröffentlichungsnummer: **0 309 858**
**A1**

## (12) EUROPÄISCHE PATENTANMELDUNG

(21) Anmeldenummer: 88115364.7

(22) Anmeldetag: 20.09.88

(51) Int. Cl.4: **H04N 5/783 , H04N 5/262**

(30) Priorität: 29.09.87 DE 3732789

(43) Veröffentlichungstag der Anmeldung:
05.04.89 Patentblatt 89/14

(84) Benannte Vertragsstaaten:
AT BE CH DE ES FR GB GR IT LI LU NL SE

(71) Anmelder: **Deutsche Thomson-Brandt GmbH
Hermann-Schwer-Strasse 3 Postfach 1307
D-7730 Villingen-Schwenningen(DE)**

(72) Erfinder: **Platte, Hans Joachim, Dr.-Ing.
Königsberger Weg 22
D-3005 Hemmingen 4(DE)**
Erfinder: **Keesen, Heinz Werner, Dr.-Ing.
Tiestestrasse 5
D-3000 Hannover 1(DE)**

(74) Vertreter: **Körner, Peter, Dipl.-Ing.
Deutsche Thomson-Brandt GmbH Patent-
und Lizenzabteilung Göttinger Chaussee 76
D-3000 Hannover 91(DE)**

(54) Verfahren zur zeitgerafften Wiedergabe eines aus Einzelbildsequenzen bestehenden aufgezeichneten Bildsignals.

(57) Bei einer zeitgerafften Wiedergabe von auf Magnetband aufgezeichenten Bildern werden nur einzelne Bilder aus einem kontinuierlichen Bildsignal wiedergegeben. Bis zum Auffinden, Lesen und Wiedergeben eines auf ein erstes Bild folgendes zweites Bild wird das erste Bild wiederholt wiedergegeben. Dies führt zu unangenehm rukkenden Bewegungsabläufen. Dieser Eindruck wird durch kontinuerliches Überblenden der aufeinanderfolgenden, wiederzugebenden Bilder vermieden. Anwendung findet die Erfindung in Bildaufzeichnungs-und Wiedergabegeräten.

EP 0 309 858 A1

Verfahren zur zeitgerafften Wiedergabe eines aus Einzelbildsequenzen bestehenden aufgezeichneten Bildsignals

Die Anmeldung betrifft ein Verfahren zur zeitgerafften Wiedergabe eines aus Einzelbildsequenzen bestehenden aufgezeichneten Bildsignals, gem. Oberbegriff des Patentanspruchs 1.

Aus der DEOS 3540901.0 ist eine zeitgeraffte Widergabe bekannt, bei der zuerst ein erstes Bild gelesen und wiedergegeben wird. Danach wird das Kopfrad mit hoher Geschwindigkeit, ohne Lesevorgang, über mehrere Bilder hinweg weitergesteuert und danach ein zweites Bild gelesen und wiedergegeben, sodaß die nicht gelesene Bilder im Sinne einer Zeitraffung wegfallen. Das Kopfrad benötigt für den Sprung vom ersten gelesenen Bild bis zum zweiten gelesenen Bild eine gewisse Zeit. Diese wird dadurch ausgefüllt, daß das erste Bild beim Lesen in einem Speicher gespeichert wird, und während dieser Zeit erneut ausgelesen wird, damit keine Signalunterbrechung auftritt. Es werden somit einzelne Bilder aus einem kontinuierlichen Bildsignal entnommen. Dies führt jedoch zu unangenehm ruckenden Bewegungsabläufen.

Der Erfindung leigt die Aufgabe zugrunde, ein Verfahren zur zeitgerafften Wiedergabe eines aus Einzelbildsequenzen bestehenden aufgezeichneten Bildsignals anzugeben, bei dem unangenehm rukkende Bewegungsabläufe vermieden werden.

Diese Aufgabe wird durch die im Anspruch 1 beschriebene Erfindung gelöst. Vorteilhafte Weiterbildungen der Erfindung sind in den Unteransprüchen beschrieben.

Ausgehend vom Stand der Technik, bei dem das erste gelesene Bild wiederholt wiedergegeben wird, bis das darauf folgende Bild gelesen ist, werden bei dem erfindungsgemäßen Vorschlag mindestens zwei Bildspeicher verwendet, in die nacheinander zwei aufeinander folgende wiederzugebende Bilder einzuspeichern sind. Dauert die Ansteuerzeit bei der zeitgerafften Wiedergabe z. B. acht Bilder, werden während einer ersten Zeit, die kleiner ist als die gesamte Ansteuerzeit, z.B. während der Zeitdauer von vier Bildern, das erste Bild aus dem ersten Speicher viermal wiederholt. Es handelt sich hierbei also um vier reine Wiederholungen. Während der restlichen Dauer der Ansteuerzeit wird von dem ersten Bild kontinuierlich während der Dauer von weiteren vier Bildern auf das nächste gespeicherte Bild übergeblendet. Nach Beendigung dieser Überblendung hat der Lesekopf des Wiedergabegerätes das übernächste Bild angesteuert, beginnt dieses zu lesen und in den ersten Speicher einzulesen. Daraufhin wiederholt sich der Vorgang von neuem, bis die zeitgeraffte Wiedergabe abgeschlossen ist.

Durch die Überblendung von einem Stützbild zu einem folgenden Stützbild wird ein angenehmerer Bildeindruck vermittelt, als bei der reinen Wiedergabe von Stützbildern.

Als Überblendfunktion kann eine lineare Überblendfunktion verwendet werden. Für eine Wiedergabe mit starken Bewegungsabläufen kann es vorteilhaft sein, als Überblendfunktion eine Überblendfunktion mit Bewegungsschätzung zu verwendet.

Die erfindungsgemäße Lösung wird im folgenden anhand der Zeichnung erläutert. Darin zeigt

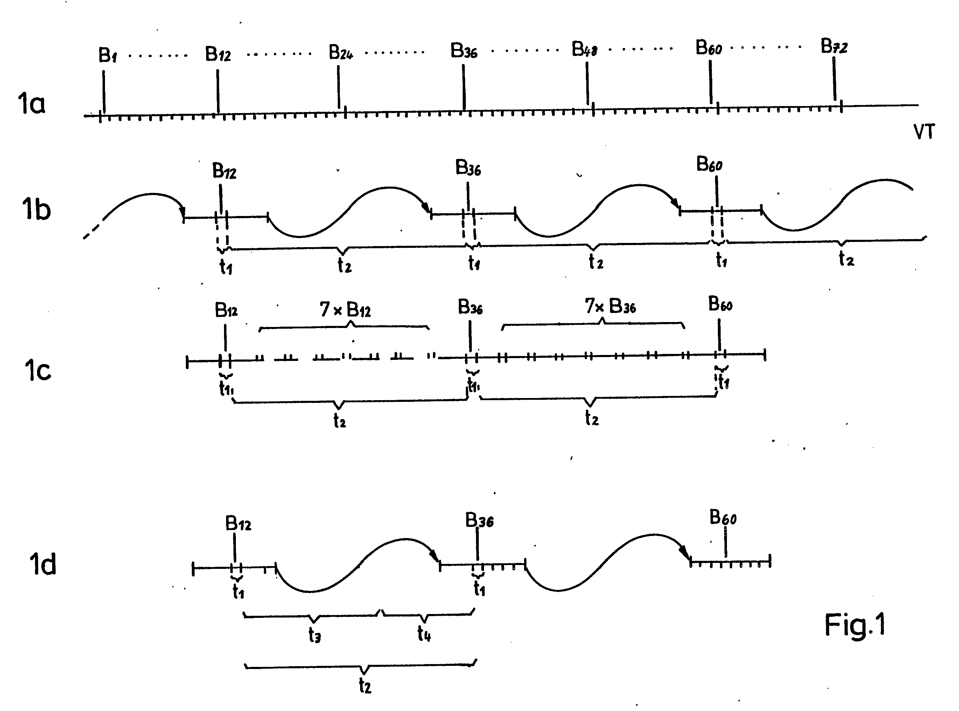

Fig. 1a ein aus Einzelbildsequenzen bestehendes Bildsignal,

Fig. 1b bei Zeitrafferbetrieb zu lesende Bilder

Fig. 1c bekannte Wiedergabe mittels Wiederholung

Fig. 1d Wiedergabe mit Überblendung

Fig. 1a zeigt ein aus Einzelbildsequenzen bestehendes Bildsignal aufgetragen über eine Video-Zeitachse $V_t$. Dabei sind $B_1$, $B_2$, ...$B_{24}$ eine Sequenz von 24 Vollbildern, die zeitlich nacheinander innerhalb eines beliebig herausgegriffenen Zeitintervalls von 24/25 s in einem 50 Hz-Fernsehsystem übertragen werden. Diese Sequenz ist mit einem Geeigenten Video-Recorder entsprechend Fig. 1a auf ein Magnetband gespeichert. Bei der Verwendung eines Aufzeichnungssystems nach DE-P 35 09 584.9 füllen die Daten der 24 genannten Bilder mit entsprechenden Ton- und Zusatzdaten genau einen Block. Für ein solches System wird erfindungsgemäß eine vorteilhafte Realisierung des sog. schnellen Bildsuchlaufs vorgeschlagen, bei dem für jede Suchlauf-Geschwindigkeit nur ein bestimmtes Bild eines jeden Blocks, z.B. $B_{12}$, $B_{36}$, $B_{60}$, ...auf dem Monitor dargestellt wird, wie es in Fig. 1b gezeigt ist. Es wird während einer Zeit $t_1$ gelesen, gespeichert und wiedergegeben. Sei N = 3, wobei N der Zeitrafferfaktor ist, so wird jedes der Bilder $B_{12}$, $B_{36}$, $B_{60}$ usw. 24/N-fach während einer Zeitspanne $t_2$ wiederholt, bevor das jeweils nächste Bild zur Verfügung steht. Die Wiedergabe solcher bekannten Stützbilder ist in Fig. 1c dargestellt. Dabei wird bei N = 3 das bild $B_{12}$ insgesamt achtmal gezeigt, bzw. siebenmal wiederholt bis das nächste $B_{36}$ gelesen und gezeigt wird.

In Fig. 1d wird die erfindungsgemäße Wiedergabe der Bilder dargestellt. Dabei beträgt die Ansteuerzeit des Lesekopfs von einem zu lesenden Bild bis zum anderen $t_2$. Nach Lesen des Bildes $B_{12}$ während der Lesezeit $t_1$ wird dieses in einem ersten Zeitintervall $t_3$ nur viermal wiederholt wiedergegeben. In einem zweiten Zeitintervall $t_4$ wird $B_{36}$

aufgeblendet und $B_{12}$ dazu synchron abgeblendet mittels spezieller Überblendfunktion, bis nach einer Übergangsphase von z.B. drei Bildern der Bild $B_{36}$ ohne Bildanteile von Bild $B_{12}$ wiedergegeben wird. Eine schaltungstechnische Realisierungsmöglichkeit dieses Verfahrens besteht darin, daß das Bild $B_{12}$ bei der Wiedergabe auf einem Monitor gleichzeitig in einen ersten Speicher eingegeben wird. Eine Wiedergabe des Bildes $B_{12}$ findet erst dann statt, wenn das Bild $B_{36}$ ebenfalls gelesen und gespeichert ist. Bis zur Beendigung des Ansteuervorganges des Lesekopfes hinzu Bildes $B_{60}$ wird, wie oben beschrieben, zuerst das Bild $B_{12}$ viermal wiederholt aus dem ersten Speicher gelesen, dann $Bild_{12}$ auf Bild $B_{36}$ übergeblendet, bis das Bild $B_{60}$ gelesen werden kann. Dieses wird dann in den ersten Speicher von Bild $B_{12}$ eingelesen und der Vorgang beginnt erneut.

## Ansprüche

1. Verfahren zur Reproduktion einer nur in einzelnen Bildern oder Teilbildern empfangenen oder von einem Speichermedium gelesenen Bildsequenz, **dadurch gekennzeichnet**, daß mindestens zwei zeitlich nacheinander wiederzugebende Bilder oder Teilbilder in Bildspeichern gespeichert sind, daß in einer Zeitspanne entsprechend der Wartezeit zwischen Empfang oder Lesen eines auf die gespeicherten Bilder oder Teilbilder folgenden wiederzugebenden dritten Bildes zunächst das jeweils erste Bild oder Teilbild wiederholt aus dem Speicher wiedergegeben wird, daß mittels spezieller Überblendfunktion innerhalb der Wartezeit das erste Bild oder Teilbild in einem oder mehreren Wiedergabezyklen auf das zweite gespeicherte Bild oder Teilbild übergeblendet wird und daß dieses zweite Bild dann für die nächste Zeitspanne entsprechend der neuerlichen Wartezeit die Rolle des ersten Bildes einnimmt.

2. Verfahren nach Anspruch 1, **dadurch gekennzeichnet**, daß als Überblendfunktion eine lineare Überblendfunktion verwendet wird.

3. Verfahren nach Anspruch 1, **dadurch gekennzeichnet**, daß als Überblendfunktion eine Überblendfunktion mit Bewegungsschätzung verwendet wird.

Fig.1

EP 0 309 858 A1

H87/024

## EINSCHLÄGIGE DOKUMENTE

EP 88115364.7

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE - A1 - 3 524 128 (DEUTSCHE THOMSON)<br><br>* Zusammenfassung; Ansprüche 1,2,24; Spalte 5, Zeilen 23-46 *<br><br>-- | 1 | H 04 N 5/783<br>H 04 N 5/262 |
| Y<br>A | AT - B - 378 640 (SONY)<br>* Fig. 27A,27B; Seite 13, Zeilen 40-53 *<br><br>-- | 1<br>2 | |
| A | US - A - 4 451 857 (MIKADO)<br><br>* Zusammenfassung; Fig. 4,11; Spalte 7, Zeile 46 - Spalte 9, Zeile 11; Ansprüche 1-4 *<br><br>-- | 1 | |
| A | DE - A1 - 2 710 781 (SIEMENS)<br><br>* Gesamt *<br><br>---- | 1 | |

**RECHERCHIERTE SACHGEBIETE (Int. Cl.4)**

H 04 N 5/00

Der vorliegende Recherchenbericht wurde für alle Patentansprüche erstellt.

| Recherchenort | Abschlußdatum der Recherche | Prüfer |
|---|---|---|
| WIEN | 13-12-1988 | DIMITROW |